# EUROPEAN PATENT SPECIFICATION

(11) **EP 3 485 300 B1**
(45) Date of publication and mention of the grant of the patent: **03.06.2020**
(21) Application number: 17748407.8
(22) Date of filing: 14.07.2017
(51) Int. Cl.: G01V 3/08, G01V 3/10, G01V 3/26

(54) **METHOD FOR CHARACTERIZING A METALLIC INTERFERENCE MASS**
VERFAHREN ZUR CHARAKTERISIERUNG EINER METALLISCHEN INTERFERENZMASSE
PROCÉDÉ DE CARACTÉRISATION D'UNE MASSE D'INTERFÉRENCE MÉTALLIQUE

(30) Priority: 15.07.2016 DE 102016113136
(43) Date of publication of application: 22.05.2019
(73) Proprietor: Heinrich Hirdes GmbH, 21079 Hamburg (DE)
(72) Inventor: KÖLBEL, Jan, 21079 Hamburg (DE)
(74) Representative: Schmidt, Axel
(86) International application number: PCT/EP2017/067946
(87) International publication number: WO 2018/011428

(56) References cited:
- EP-A2- 0 780 705
- US-A1- 2015 145 519
- US-A1- 2016 187 521
- ZHANG Q ET AL: "Unexploded ordnance location and identification using borehole magnetometery", IEE PROCEEDINGS: SCIENCE, MEASUREMENT AND TECHNOL, IEE, STEVENAGE, HERTS, GB, vol. 153, no. 1, 5 January 2006 (2006-01-05), pages 22-30, XP006025812, ISSN: 1350-2344, DOI: 10.1049/IP-SMT:20050027
- Kord Ernstson: "Dreiachs-Magnetometer: Was bringen sie bei der Bohrloch-Sondierung in der Kampfmittelortung? Three-axis magnetometers: What do they contribute to borehole sounding for explosive ordnance detection?", Ebinger News - Aktuelles forum für innovative Suchtechnologie, 1 February 2015 (2015-02-01), pages 1-21, XP055622376, Retrieved from the Internet: URL:https://ebingergroup.de/wp-content/upl oads/2018/05/sondernews02_15.pdf [retrieved on 2019-09-16]

## Description

The present invention relates to a method for characterizing a metallic interference mass that lies concealed under a ground surface, for detecting unexploded ordnance.

Various approaches are known from the prior art for detecting electrically conductive objects that lie concealed under a ground surface. In this connection, methods and devices for detecting unexploded ordnance constitute application fields of particularly high importance. In the context of the present invention, unexploded ordnance is understood to primarily include duds and fractured bombs or so-called partially detonated explosive shells, mines, and aerial bombs, dropped munitions, or torpedoes; all of the above-mentioned groups can pose considerable risks to people and the environment even after many decades.

Among other things, approaches for inducing electromagnetic pulses have proven useful as means for locating metallic objects and along with them, even non-ferromagnetic objects, since these approaches are superior in essential points to a purely magnetic probing. In unexploded ordnance detection of this kind, electromagnetic pulses are transmitted into the ground by means of an excitation coil in an exact area that is generally determined by means of geo-coordinates. A receiver unit then measures an electromagnetic pulse response that is emitted due to eddy currents in metallic objects in reaction to an electromagnetic excitation pulse.

In order to suppress surface interference of the receiver unit and also to achieve a greater proximity to a suspicious object under the surface of the ground, it is known from EP 0 780 705 B1 among others to lower the receiver unit into a bore hole. The bore hole is sunk to a level that corresponds to a depth of the metallic interference mass beneath the surface of the ground. To this end, it is necessary to determine a precise position of each interference mass or suspicious object as well as its depth beneath the surface of the ground in advance by means of known methods.

The object of the present invention is to create a method to further improve the detection possibilities with the goal of a more detailed characterization of a metallic interference mass for a reduced expense.

This object is attained according to the method of claim 1. In other words, the invention proposes a combined method composed of electromagnetic excitation at the ground surface in combination with a chronological evaluation of magnetic reaction signals in the three spatial axes that are orthogonal to one another in order to arrive at clearer conclusions regarding a shape and orientation of a suspicious object in the ground. In this connection, measuring a response signal as a magnetic field is an excellent approach because it yields a very sensitive detection specifically of a decay behavior of the response signal. In this case, the decay behavior of the response signal is subsequently used particularly for characterizing the interference mass and is therefore particularly important. Various approaches that use magnetometers in bore holes are known from the prior art, for example from Kord Ernstson: "Dreiachs-Magnetometer: Was bringen sie bei der Bohrloch-Sondierung in der Kampfmittelortung? Three-axis magnetometers: What do they contribute to borehole sounding for explosive ordnance detection?",Ebinger News - Aktuelles Forum für innovative Suchtechnologie, 1 February 2015 (2015-02-01), pages 1-21; or from WO 1990/001104. This last reference, however, only discloses applications for ongoing measurement of the progress of a bore hole, which is used to steer an ongoing drilling through subsoil. According to the invention, however, an external electric excitation is used to characterize an object that is basically known with regard to its position and depth, with the aim of distinguishing between a piece of unexploded ordnance and a largely non-hazardous metal part.

Advantageous modifications are the subject of the respective dependent claims. Accordingly, in one preferred embodiment of the invention, before a measurement cycle, a compensation step is performed in which the results of a measurement of the triaxial magnetometer are determined with the excitation loop switched off. In order to achieve a zeroing in a compensation element, these results are stored, in particular at least for the duration of this measurement cycle, for consideration in the measurement results. A measurement procedure can thus include numerous individual measurements, particularly in order to reduce the influence of interference on an overall result.

Preferably, the measurement procedure is repeated at various depths of the bore hole. In this case, depths both above and below the presumed depth of the metallic interference mass are set and their measurement values are used. Preferably, these measurements are repeated at a plurality of fixed intervals.

According to the invention, at least three bore holes are sunk into the ground surface close to the position of the metallic interference mass. When three bore holes are used, they form an equilateral triangle relative to one another. In this case, the position of the metallic interference mass is located at the centroid of the triangle. Subsequently each of these bore holes is measured in the same way. Comparable geometric configurations are generally produced when there are more than three bore holes.

According to preferred embodiments of the invention, a maximum of the shortest distance of the bore hole from the position of the metallic interference mass on the ground surface is approx. 200 cm. But with a minimum distance of approx. 100 cm from the position of the metallic object, it is preferable to calibrate a distance of the bore hole from the object of approx. 120 to approx. 150 cm on the ground surface.

A distance of the position of the metallic interference mass from an outer edge of the excitation loop at the ground surface is advantageously selected, which corresponds to the depth of the position of the metallic interference mass under the ground surface. It should be noted that because of accretion processes or accumulations, depth levels of the metallic interference mass of approx. 15 m can be reached, which are far beyond the original penetration depths of even heavy aerial bombs, which can be from approx. 2 m to approx. 5 m. The excitation coils that have to be used also turn out to be correspondingly large; as a rule, coils with side lengths of approx. 7 m x 7 m to approx. 20 m x 20 m are used. Square basic shapes are preferred, among other things due to the symmetries in the resulting field; it is also possible, though, to use rectangular coil shapes, for example.

Advantageously, the excitation of the metallic interference mass is carried out by means of induction in different spatial directions that are orthogonal to one another if possible for a complete illumination or excitation of the space under the ground surface in the vicinity of the metallic interference mass. This is achieved through a corresponding orientation of the primary field based on a different arrangement of a flat excitation loop resting on the ground surface. Preferably, three different configurations of the excitation loop are laid out and measured, as described in greater detail below based on exemplary embodiments with reference to the drawings.

In an embodiment, the process of measurement within a bore hole is repeated without any changes in the arrangement of the excitation loop for the other bore holes as well, where special care is taken so that the orientation of the sensor within the arrangement always remains the same over the process of measurement of the different bore holes. Thus, once calibrated, the coordinate system of the triaxial magnetometer remains unchanged, with no rotation throughout all of the measurements of an interference mass in that a corresponding marking on the sensor is used for a visual check of the position of this marking during the insertion of sensor into a new bore hole. In an alternative embodiment, the coordinate system of the triaxial magnetometer remains unchanged even during insertion into another of said bore holes in that a mechanical guidance in the form of a groove or some other guide is used during the insertion of sensor into a new bore hole.

The above-described method can be used with a correspondingly embodied device for characterizing metallic objects lying deep under a ground surface, where a position and depth of such a metallic interference object has been detected in advance using other geophysical procedures and methods. The purpose of a characterization by means of a method according to the invention is to determine - based on information about an object size, object shape, material properties, and wall thickness and/or metal mass - whether or not the respective interference object is suspicious from an unexploded bomb standpoint. Furthermore, a device in the form of a system can also be used for detecting objects.

Other features and advantages of embodiments according to the invention will be described in greater detail below with reference to exemplary embodiments based on the drawings. In the schematically depicted drawings:
- Fig. 1:: is a system overview of a first exemplary embodiment, divided into a transmitting side and a receiving side;
- Figs. 2a - 2c:: show different arrangements of an excitation loop at the ground surface relative to an anomaly point and the correspondingly arranged bores und
- Fig. 3:: shows a three-dimensional view for explaining a measurement method according to the invention through the use of a bore hole and
- Fig. 4:: shows a view according to Fig. 3 for showing a known measurement method.

Throughout the various drawings, the same reference numerals are consistently used for the same elements or method steps. Without limiting the invention, only one use for characterizing anomalies or other metallic bodies will be illustrated and described below. It is clear to the person skilled in the art, however, that in the same way, an adaptation can be carried out to permit uses in raw material explorations, for a positioning of cables and pipelines, or for archaeology.

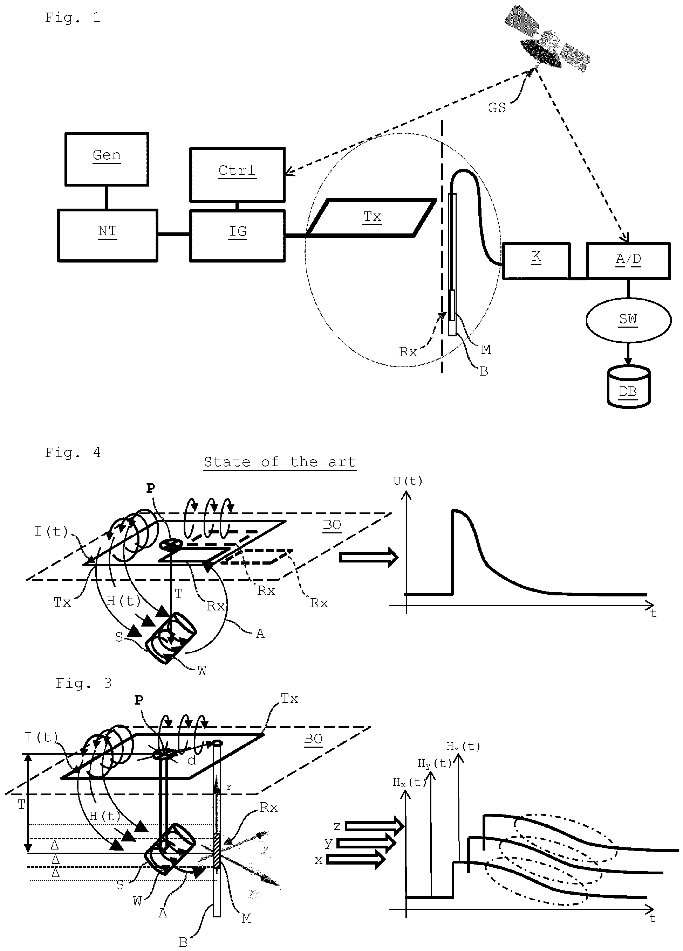

Fig. 4 is a three-dimensional view depicting a known measurement method, which is used to localize a conductive metallic interference mass S, which lies concealed under a point P at a depth T under a ground surface BO. Around this point P, a rectangular conductor coil Tx is laid, through which a pulsed current I(t) flows. Since each flowing current I(t) is surrounded by a magnetic field H(t) that spreads out in space but is only suggested here for the sake of clarity, the metallic interference mass S is also penetrated by a part of the magnetic field. If the flowing current I(t) is switched off very abruptly in order to produce a current pulse, then decaying eddy currents in the metallic interference mass S produce an electromagnetic pulse response A(t) that can be measured at the ground surface BO by means of a receiver loop Rx. Based on a three-dimensional shape of the electromagnetic pulse response, a response signal, which can be measured in the receiver loop Rx, depends on a respective location of the measurement at the ground surface BO. Thus, many different areas at the ground surface BO are covered by the receiver loop Rx in the indicated way and measured in accordance with the above-described method.

As a result, with a known method according to Fig. 4, a region of a maximum strength of the pulse response A at the ground surface BO can be determined. It is thus possible to draw conclusions about a size and rough outer contour of a metallic interference mass S, i.e. to distinguish between a round, oblong, or curved object.

It is also known, with the goal of a reliable characterization of a metallic interference mass S, to make a recording of electromagnetic pulse responses A, for which purpose a bore hole B is sunk to the depth T at a distance d from the point P on the ground surface BO in order to thus bring a receiver loop Rx as close as possible to the metallic interference mass S. Simply by virtue of the greater proximity, it is thus possible to receive more powerful measurement signals from a pulse response. In addition, surface interference of the kind that is generally produced by even small metal parts is prevented from affecting the electromagnetic pulse responses. Apart from this, the principle is the same as described above with reference to the drawing in Fig. 4.

In one exemplary embodiment of the invention shown in Fig. 3, however, a receiver loop Rx is not lowered into the bore hole B, but rather a fluxgate triaxial magnetometer, hereinafter referred as the magnetometer M. To be precise, it has turned out that the magnetic components of the pulse responses A are in fact weaker than their electric components, but the magnetic components of a pulse response A(t) are more informative when it comes to evaluating their chronological decay curves with a view to characterizing a respective metallic interference mass S.

It is particularly advantageous, therefore, that in the exemplary embodiment of the invention according to Fig. 3, instead of using a receiver coil Tx that can in principle only carry out one-dimensional measurements as the measurement tip, a triaxial magnetometer M for measuring the electromagnetic pulse responses A is inserted into the bore hole B. Consequently, three measurement results in the form of chronological progressions of the pulse response A are obtained simultaneously in the three spatial directions x, y, z at each respective depth level. It is thus possible to use different signal sequences in the three spatial directions in order, through a corresponding evaluation, to draw conclusions as to a three-dimensional shape of the metallic interference mass S with the aim of a more reliable characterization.

Fig. 1 shows an overview of a system according to an exemplary embodiment, spatially divided into a transmitting side and a receiving side. According to it, the transmitting side has a generator Gen, which is connected to a regulatable power supply unit NT for producing a current I of approx. 100 A to 250 A at a voltage U of between approx. 15 V and approx. 30 V. Voltages of less than 20 V to approx. 15 V are routinely used at currents of less than 180 A, preferably 165 A to 170 A. Consequently, a generator power should be at least 10 kW in order to be able to provide a stable supply of the desired output values via the power supply unit NT.

The power supply unit NT is connected to a pulse generator IG, which at the prompting of a control unit Crtl, produces current pulses I(t) and feeds them into the transmission loop Tx. In order to avoid interference due to the prevailing commercial power frequency of 50 Hz in Central Europe and the 16 2/3 Hz used in German rail traction current prevailing, in this exemplary embodiment, a standard frequency or basic frequency of the current pulses I(t) of 8 1/3 Hz is used. At a commercial power frequency of 60 Hz, a standard frequency of 6 1/4 Hz is preferable. Positive and negative current pulses are produced, with an observation time window between the current pulses. This observation time window is approximately three times as long as one of the current pulses. To eliminate so-called dirt effects, the first and last approximately 10% of a pulse response signal A(t) in the observation time window are not inspected or evaluated, as indicated by dashed lines in the graphs of Fig. 3.

Adjustments in the amperage I and/or the voltage U that is applied to the transmission loop Tx are carried out on the receiver side as part of a setup before initial operation of the measuring device. It is therefore important to produce current pulses I(t) with the clearest possible edge progressions, i.e. no overshoots occur in the region of the sharpest or most abrupt possible pulse edges.

The first component on the receiving side of the device is a receiver Rx in the form of a triaxial magnetometer M. As part of the receiving side of the above-described measurement system, the magnetometer M is coupled to the transmitting side via the pulse response A of the metallic interference mass S, which is emitted due to the excitation by means of current pulses I(t) of the transmitting side. In addition, the magnetometer M in the bore hole B is enclosed by the transmission loop Tx as a component of the transmitting side. This situation is indicated by the dotted line enclosing the transmission loop Tx and the magnetometer M in the bore hole B, although these spatial and functional couplings have been omitted from the graphic depiction to facilitate description of the transmitting side and receiving side.

The magnetometer M detects a spatial direction of a magnetic pulse response A(t) at each respective depth level T±α^{∗}Δ - where in this exemplary embodiment α assumes maximum integral values of from 2 to approximately 5. The magnetic pulse response A(t) is measured with a respective chronological decay behavior by reduction in the three spatial directions x, y, z. The magnetic pulse response A(t) of a metallic interference mass S is consequently not only a function of time, but also a function of space due to the three-dimensional shape of the metallic interference mass S and the three-dimensional shape of the electromagnetic fields. In principle, therefore, as many measurements as possible should be carried out at different depths or depth levels. For reasons of practical feasibility, though, only depth levels of T ± α ^{∗} Δ are covered in a respective bore hole B, in this case where α = 0 to 3; generally speaking, preferably only 3 depth measurement points at intervals with a Δ of approximately 20 cm to approximately 100 cm - but in this case, preferably at a spacing value Δ of 50 cm - are covered with measurements arranged symmetrically around an estimated depth T of the metallic interference mass S. In this example, in a bore hole B of at most 1.5 m above and 1.5 m below an estimated depth T of the metallic interference mass S, measurements of a decay behavior of the magnetic pulse response of the interference mass S are taken in three axes.

The magnetometer M is connected to a compensation element K via a supply- and measurement line. This compensation element K is particularly important for a qualitatively and quantitatively high-quality measurement that is to be carried out because it executes a compensation to tune out the magnetic influences of the environment including the earth's magnetic field, the interference mass S itself, and the surrounding electrically conductive components such as the excitation or transmission coil Tx, as distortions or corruptions of the measurements. To determine the respective compensation values in all three spatial axes x, y, z while the excitation switched off and the currentless excitation loop Tx is at the respectively set depth level T ± α ^{∗} Δ, the stationary measurement signals of the magnetometer M in the bore hole B are determined and stored for subsequent measurements at this depth level. The actual measurement values are subsequently displayed, taking into account these respectively measured compensation values. To eliminate stochastic interference, for each measurement position or depth, the method also passes through and measures many periods of excitation pulses. Even with approx. 100 periods, this only consumes a small amount of system time.

Connected to the compensation element K, a measurement signal converter A/D is provided, which essentially carries out a digitization of the signals of the three spatial directions, which have up to this point been processed in analog fashion. For synchronization purposes, the measurement signal converter A/D is also connected to a geo-stationary coordinate system, in this case GPS, which is indicated here by means of a GS satellite, to which the control unit Crtl on the transmitting side is also connected. In this way, a transmission of current pulses on the transmitting side and their evaluation on the receiver side are synchronized with each other exactly. The measurement signals that have now been digitized by the measurement signal converter A/D are supplied to a software SW for processing and evaluation. The respective results are stored in a database DB along with at least the geo-coordinates of the bore hole B and respective depth information or measurement height. The acquired data are thus safely stored and available at any time for subsequent evaluation and further use.

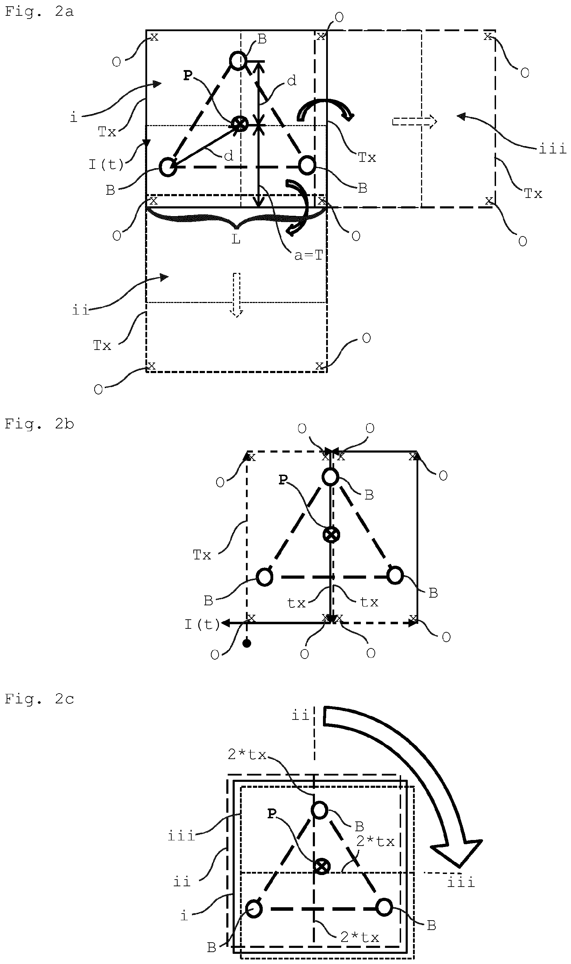

The drawings in Figs. 2a - 2c show different arrangements of an excitation loop Tx at the ground surface BO relative to an anomaly point P and correspondingly arranged bores B. A reliable characterization of the metallic interference mass S requires a high data quality. In principle, the metallic interference mass S must be excited and detected from as many directions as possible in order to achieve this. In order to minimize the measurement complexity, among other things, the metallic interference mass S is excited in three directions in three separate steps. Optimally, the three directions of the excitation are all perpendicular to one another like the directions of the three edges that meet at the corner of a cube. In an approximation that is good enough from a practical standpoint, this is achieved by means of the position and geometry of the transmission loop Tx as described below. The electromagnetic field moves in roller fashion around a cable of the current-carrying transmission loop Tx, as shown in Fig. 3. It is thus possible to produce electromagnetic excitations under the ground surface BO, with a pronounced emphasis, generally in one of the respective spatial coordinates x, y, z.

Consequently, if the ground surface BO above the anomaly P does not restrict the design of the transmission loop Tx - e.g. due to development etc. - making a regular design of the transmission loop Tx impossible, then this special excitation can largely be achieved by means of standard arrangements of the transmission loop Tx that are described below with reference to an exemplary embodiment of the invention, for example by means of the two illustrated shifts out of the standard configuration.

In addition, the three bore holes B here form an equilateral triangle with the anomaly P at the center point. It is thus possible to optimally detect the magnetic field. To acquire additional data, however, - without this being separately discussed in further detail here - it is also possible to use four, five, or even more bore holes while maintaining the below-indicated criteria of the position relative to the position P and the depth T of the interference mass S. This is particularly advisable in the case of a metallic anomaly or metallic interference mass S extending over a large area. This can be a formation composed of a plurality of individual interference masses S₁ through Sⱼ, whose potential hazard should preferably be clarified individually by means of the described method.

When using the proposed method, the position P at the ground surface and the depth T of the interference mass S must be known. This information is taken, for example, from the evaluation of a prior conventional triaxial measurement, e.g. a measurement using a gradiometer or bore hole radar. Based on this, spaced 120 to approx. 150 cm from the interference mass S or its position P on the ground surface BO, positions are calibrated for the bore holes B, in this case, three of them. In an optimum possible arrangement around the position P of the anomaly, the bore holes B form an essentially equilateral triangle with one another. In this instance, the position P of the metallic interference mass S is located approximately at the centroid of this triangle.

The bore holes B here are sunk and cased with diameters of approx. 2.5" in a range - indicated above by way of example - of deeper than T + 3^{∗}Δ in order to be able to subsequently also carry out a measurement at a depth of T + 3^{∗}Δ in a PE- or PVC pipe serving as a temporary liner for the bore hole B, i.e. significantly below the suspected depth level T of the interference mass. The magnetometer M is lowered to this point in order to be able to obtain measurement values in all three spatial axes at various depths and at correspondingly changed angles and distances relative to the metallic interference mass S.

Then pegs O are placed as indicated in the drawing in Fig. 2a to form a square, with the position P of the metallic interference mass S at the ground surface BO situated at the center point, as an aid for laying the transmission loops Tx. The side length L of this square corresponds to twice the depth level T of the metallic interference mass S. A distance a of the position P of the metallic interference mass S from the transmission loop Tx laid around the pegs O corresponds to the depth level T of the metallic interference mass S.

The transmission loop Tx is then laid on the ground surface BO using various arrangements so that the interference mass S is excited from three directions that are as different from one another as possible. To that end, in a first measurement arrangement i, the transmission loop Tx therefore lies in the form of a square around the pegs O. This is a kind of basic configuration of the transmission loop Tx in which at a current flow I in the vicinity of the position P, an excitation field is generated, which is oriented along the z coordinate. This is followed by two other arrangements ii, iii of the transmission loop Tx that are produced by means of lateral shifts or displacements starting from this basic configuration; these will be described below with reference to the drawing in Fig. 2a.

In order to be able to carry out the actual measurement, a magnetic sensor or magnetometer M is lowered into a bore hole B and detects a respective pulse response A of the interference mass S with its chronological progression in all three spatial axes x, y, z in the bore hole B. This measurement is repeated in various so-called measurement stations starting from the depth T at depth intervals Δ of approx. 50 cm in the bore hole B so that with two or three measurements above the depth level T and two or three measurements below it, this yields a total of five or seven measurements, each with three time progressions according to the spatial axes x, y, z of the pulse response A of the interference mass S in a bore hole for each loop configuration.

This process is repeated without any changes in the arrangement of the excitation loop Tx for the two other bore holes B as well. In this instance, a measurement table that is not shown in detail is moved to the next bore hole B together with the sensor Rx and the triaxial magnetometer M. In so doing, special care is taken so that the orientation of the sensor Rx within the arrangement always remains the same - in other words, once calibrated, the coordinate system of the triaxial magnetometer M remains unchanged, with no rotation throughout all of the measurements of an interference mass S. In particular, it must not be rotated because otherwise, x and y values, for example, can become so distorted that they are no longer usable. A corresponding marking on the sensor is helpful here, it being necessary to always visually check the position of this marking during the insertion of a sensor rod into a new bore hole B. In order to avoid errors through advance planning, this inspection can naturally be replaced by a mechanical compulsory guidance in the form of a groove or some other guide, etc.

After the three above-described measurement cycles with the above-described measurement arrangement and configuration of the excitation loop Tx, this square of the excitation loop Tx is moved as a unit from the above-described position to the right around the position P of the interference mass S and finally downward. The up to 3 x 7 measurements are repeated in each of these two additional positions and/or configurations ii, iii of the excitation loop Tx.

If space conditions are unfavorable, i.e. particularly if there is not enough free space available for the above-described movement of the square excitation loop Tx around the position P of the interference mass S, then preferably a so-called figure-eight loop is used, as outlined in Fig. 2b. In this case, the lateral edges are bisected and provided with additional auxiliary pegs from which two branches tx of the excitation loop Tx - through which the flow passes always in the same direction - pass directly over the position P of the interference mass S. The excitation of the interference mass S then takes place essentially perpendicular to the branches tx in the x-y plane.

As shown in Fig. 2c, then across the same area marked by pegs 0, after a z-loop is used in a measurement step i according to Fig. 2a, two figure-eight loops ii and iii are used in subsequent measurement steps, which loops are constructed so that they are pivoted by 90° relative to each other. This produces three measurement arrangements i to iii, even when space conditions are cramped or restricted, in order to excite the interference mass S to obtain more informative results in three directions that are as different from one another as possible by means of a pulse induction method.

In order to obtain a high data quality, it is also necessary to ensure that distortions are avoided to the greatest extent possible. This purpose is served by the adjustment of a compensation element K. The method for adjusting the compensation element K is carried out as follows: Before a measurement cycle, a compensation step is carried out, whose result is stored in a compensation element K at least for the duration of this measurement cycle. In this instance, the preceding compensation step is carried out in that the results of a measurement performed while the excitation loop Tx is switched off are determined and these results are used for zeroing or zero adjustment of the measuring device that is used for carrying out the actual measurement. To that end, in one exemplary embodiment of the invention, these zero-measurement values are stored in the compensation element K - at least for the duration of this measurement cycle - in order to be taken into account no later than in the evaluation of the measurement results. This compensation step is preferably also repeated for each step of a depth measurement in one and the same bore hole B.

In all of the above-described exemplary embodiments, the measurement results are conveyed out of the respective bore hole B and are prepared by a software SW in a data-processing system that is not shown in detail. As the result of an evaluation, it is possible to take into consideration the progression of components of a pulse response A in the direction of the x-, y-, and z-axes over five to seven measurement depths. Based on these measurement results, it is possible to draw conclusions about a position of the interference mass S in three-dimensional space and about possible symmetries relative to any axis extending in space. It is thus possible to check length/diameter ratios, which in addition to estimates of a length and thickness of an interference mass S, also constitute essential indices for the characterization of an interference mass S as unexploded ordnance; in particular, unexploded ordnance are usually oblong bodies that are rotationally symmetrical to this longitudinal axis.

### List of reference numerals

- A: electromagnetic pulse response
- B: bore hole
- BO: ground surface
- S: metallic interference mass
- P: position of the interference mass S at ground surface BO
- a: minimal distance between position P and excitation loop Tx
- d: distance between bore hole B and position P
- T: depth of the interference mass S under the ground surface BO
- Tx: transmission loop / excitation loop
- Rx: receiver
- M: magnetometer
- Δ: depth step in a measurement in one of the bore holes B
- L: length of a lateral edge of the transmission loop Tx
- I(t): chronologically changing current flow / current pulse
- U(t): measured voltage
- H(t): measured magnetic flux of the pulse response A in B
- W: eddy currents induced in the metallic interference mass S
- Gen: generator
- IG: pulse generator
- Crtl: control unit
- GS: geo-coordinate system (GPS)
- K: compensation element
- A/D: measurement signal converter
- SW: software / data processing of digital measurement signals
- DB: database for structured storage of the results
- O: orientation posts for the transmission loop Tx
- tx: branch of the excitation loop Tx in a figure-eight configuration
- i: 1^{st} arrangement of the transmission loop Tx
- ii: 2^{nd} arrangement of the transmission loop Tx, shifted or embodied as a figure-8 loop
- iii: 3^{rd} arrangement of the transmission loop Tx, pivoted by 90° or embodied as a figure-8 loop with a 90° tilting of the figure-8 loop
- x, y, z: axes/components of three-dimensional space

## Claims

1. A method for detecting unexploded ordnance by characterizing a metallic interference mass (S) that lies concealed under a ground surface (BO),
where at the ground surface (BO), a bore hole (B) is sunk close to a position (P) of the metallic interference mass (S) at least down to a depth (T) that corresponds to the position of the metallic interference mass (S) and
electromagnetic pulses are transmitted via an excitation loop (Tx) into the ground around the bore hole (B) and
a pulse response (A) is measured in a receiver unit (Rx), with the receiver unit (Rx) being lowered into the bore hole (B), wherein a pulse response (A) of the interference mass (S) with a chronological progression is detected and evaluated in the receiver unit (Rx) by means of a magnetic sensor or magnetometer (M), in all three spatial axes x, y, z in the bore hole (B), where close to the position (P) of the metallic interference mass (S), in order to arrive at clearer conclusions regarding its shape and orientation in the ground, at least three bore holes (B) are sunk, which form an equilateral triangle with one another
and the position (P) of the metallic interference mass (S) is situated at the centroid of this triangle,
where a chronological evaluation of magnetic reaction signals is carried out in the three spatial axes that are orthogonal to one another in order to arrive at clearer conclusions regarding a shape and orientation of the metallic interference mass (S) in the ground to distinguish between a piece of unexploded ordnance and a largely non-hazardous metal part.

2. The method according to the preceding claim, **characterized in that** before a measurement cycle, a compensation step is performed, in which the results of a measurement performed while the excitation loop (Tx) is switched off are determined and for zeroing purposes, are stored in a compensation element (K) for at least the duration of this measurement cycle, for consideration in the measurement results.

3. The method according to one of the preceding claims, **characterized in that** the measurement procedure is repeated at various depths of the bore hole (B) above and below the presumed depth (T) of the metallic interference mass (S).

4. The method according to one of the preceding claims, **characterized in that** a maximum distance (a) of approx. 200 cm between the bore hole (B) and the position (P) of the metallic interference mass (S) is calibrated, but preferably, a distance (d) from the metallic interference mass (S) of approx. 120 to approx. 150 cm is calibrated.

5. The method according to one of the preceding claims, **characterized in that** the excitation by induction is carried out in different spatial directions (x, y, z) orthogonal to one another through corresponding orientation of the primary field based on a different arrangement of an excitation loop (Tx) lying on the ground surface (BO).

6. The method according to the preceding claim, **characterized in that** different configurations of the excitation loop (Tx) are laid and measured, in which the excitation loop (Tx) is laid in the form of a square or in the form of a figure-eight loop within the square is moved over the position (P) of the metallic interference mass (S).

7. The method according to one of the preceding claims, **characterized in that**
a distance (a) from an outer edge of the excitation loop (Tx) at the ground surface (BO) is set to a length that corresponds to at least the depth (T) corresponding to the position of the metallic interference mass (S).

8. The method according to one of the preceding claims, **characterized in that** the measurements are repeated from once to approximately five times at distances (Δ) of approx. 20 cm to 100 cm, but preferably approx. 50 cm, of depth change of the receiver unit (Rx, M) in the bore hole (B), both above and below an estimated depth level (T) of the metallic interference mass (S), with preferably 2-3 measurements being carried out above and 2-3 measurements being carried out below the estimated depth level (T) of the metallic interference mass (S).

9. The method according to one of the preceding claims, **characterized in that** the measurements are performed while retaining the bore holes (B) in three differently laid configurations (i, ii, and iii) of the excitation loop (Tx), wherein
starting from an excitation loop (Tx) that is laid in the form of a square around the position (P) of the metallic interference mass (S) as the center, then
two movements of this square in the x-y plane are executed by means of a 90° pivot
and/or
the excitation loop (Tx) is laid as a second arrangement (ii) in the form of a figure-eight loop within the same square, with two branches (tx) extending over the position (P) of the metallic interference mass (S) and
by pivoting the branches (tx) extending over the position (P) of the metallic interference mass (S) by 90°, is laid in a third arrangement (iii), where
after an adjustment of each of these arrangements or configurations (i, ii, iii) of the excitation loop (Tx), measurements with a preceding compensation are carried out in all of the bore holes (B) over all of the depth levels (T ± α ^{∗} Δ) with integral values for α von 0 to 2 or approx. 5.

10. The method according to one of the preceding claims, **characterized in that** the process of measurement within a bore hole (B) is repeated without any changes in the arrangement of the excitation loop (Tx) for the other bore holes (B) as well, where special care is taken so that the orientation of the sensor (Rx) within the arrangement always remains the same over the process of measurement of the different bore holes (B) and once calibrated, the coordinate system of the triaxial magnetometer (M) remains unchanged, with no rotation throughout all of the measurements of an interference mass (S) **in that** a corresponding marking on the sensor is used for a visual check of the position of this marking during the insertion of sensor (Rx) into a new bore hole (B).

11. The method according to one of the preceding claims, **characterized in that** once calibrated the coordinate system of the triaxial magnetometer (M) remains unchanged even during insertion into another of said bore holes (B) **in that** a mechanical guidance in the form of a groove or some other guide is used during the insertion of sensor (Rx) into a new bore hole (B).

## Patentansprüche

1. Verfahren zur Charakterisierung eines metallischen Störkörpers (S), der unter einer Bodenoberfläche (BO) verborgen liegt, zur Kampfmittelsuche,
wobei an der Bodenoberfläche (BO) ein Bohrloch (B) nahe einer Position (P) des metallischen Störkörpers (S) bis mindestens in eine der Lage des metallischen Störkörpers (S) entsprechende Tiefe (T) abgeteuft wird und elektromagnetische Pulse über eine Erregerschleife (Tx) in den Boden hinein um das Bohrloch (B) herum ausgesendet werden und
eine Impulsantwort (A) in einer Empfängereinheit (Rx) gemessen wird, wobei die Empfängereinheit (Rx) in das Bohrloch (B) abgesenkt wird,
wobei
eine Impulsantwort (A) des Störkörpers (S) mit zeitlichem Verlauf in der Empfängereinheit (Rx) durch einen Magnetiksensor bzw. ein Magnetometer (M) in allen drei Achsen x, y, z des Raumes hinweg in dem Bohrloch (B) erfasst und ausgewertet wird, wobei,
um deutlichere Rückschlüsse auf eine Form und Orientierung eines Verdachtsobjektes im Boden zu erhalten, nahe der Position (P) des metallischen Störkörpers (S) mindestens drei Bohrlöcher (B) abgeteuft werden, die miteinander ein im Wesentlichen gleichseitiges Dreieck bilden,
und sich die Position (P) des metallischen Störkörpers (S) ungefähr im Schwerpunkt dieses Dreiecks befindet,
wobei eine zeitliche Auswertung von magnetischen Reaktionssignalen in den drei zueinander orthogonalen Achsen des Raumes durchgeführt wird, um deutlichere Rückschlüsse auf eine Form und Orientierung des metallischen Störkörpers (S) im Boden zu erhalten, um zwischen einem Kampfmittel und einem weitgehend ungefährlichen Metallteil zu unterscheiden.

2. Verfahren nach dem vorhergehenden Anspruch, **dadurch gekennzeichnet, dass** vor einem Messdurchgang ein Kompensationsschritt durchgeführt wird, indem die Ergebnisse einer Messung bei abgeschalteter Erregerschleife (Tx) ermittelt und zur Nullung in einem Kompensationsglied (K) mindestens für die Dauer dieses Messdurchgangs zur Berücksichtigung in den Messergebnissen abgelegt werden.

3. Verfahren nach einem der vorhergehenden Ansprüche, **dadurch gekennzeichnet, dass** der Messvorgang über verschiedene Tiefen des Bohrlochs (B) oberhalb und unterhalb der angenommenen Tiefe (T) des metallischen Störkörpers (S) wiederholt wird.

4. Verfahren nach einem der vorhergehenden Ansprüche, **dadurch gekennzeichnet, dass** ein maximaler Abstand (a) von ca. 200 cm des Bohrlochs (B) zu der Position (P) des metallischen Störkörpers (S), vorzugweise aber ein Abstand (d) zu dem metallischen Störkörper (S) bei etwa 120 bis ca. 150 cm eingemessen wird.

5. Verfahren nach einem der vorhergehenden Ansprüche, **dadurch gekennzeichnet, dass** die Anregung durch Induktion in verschiedenen, zueinander orthogonalen Raumrichtungen (x, y, z) durch entsprechende Ausrichtung des Primärfeldes aufgrund unterschiedlicher Anordnung einer auf der Bodenoberfläche (BO) aufliegenden ebenen Erregerschleife (Tx) erfolgt.

6. Verfahren nach dem vorhergehenden Anspruch, **dadurch gekennzeichnet, dass** unterschiedliche Konfigurationen der Erregerschleife (Tx) ausgelegt und gemessen werden, bei denen die Erregerschleife (Tx) als Quadrat oder innerhalb des Quadrats nach Art einer Acht-Schleife über die Position (P) des metallischen Störkörpers (S) hinweg verlegt wird.

7. Verfahren nach einem der vorhergehenden Ansprüche, **dadurch gekennzeichnet, dass** ein Abstand (a) zu einer Außenkante der Erregerschleife (Tx) an der Bodenoberfläche (BO) eine Länge eingestellt wird, die mindestens der der Lage des metallischen Störkörpers (S) entsprechende Tiefe (T) entspricht.

8. Verfahren nach einem der vorhergehenden Ansprüche, **dadurch gekennzeichnet, dass** die Messungen in Abständen (Δ) von ca. 20cm bis 100 cm, vorzugsweise aber ca. 50 cm Tiefenänderung der Empfängereinheit (Rx, M) in dem Bohrloch (B) oberhalb wie unterhalb einer geschätzten Tiefenlage (T) des metallischen Störkörpers (S) ein- bis etwa fünfmal wiederholt werden, wobei vorzugsweise 2-3 Messungen oberhalb und 2-3 Messungen unterhalb der geschätzten Tiefenlage (T) des metallischen Störkörpers (S) vorgenommen werden.

9. Verfahren nach einem der vorhergehenden Ansprüche, **dadurch gekennzeichnet, dass** die Messungen unter Beibehaltung der Bohrlöcher (B) bei drei unterschiedlich ausgelegten Konfigurationen (i, ii, iii) der Erregerschleife (Tx) durchgeführt werden, wobei
ausgehend von einer als Quadrat um die die Position (P) des metallischen Störkörpers (S) als Zentrum herum verlegten Erregerschleife (Tx) anschließend zwei Verschiebungen dieses Quadrates in der x-y-Ebene unter einer Schwenkung um 90°
und/oder
die Erregerschleife (Tx) innerhalb des gleichen Quadrats nach Art einer Acht-Schleife mit zwei über die Position (P) des metallischen Störkörpers (S) hinweg verlaufenden Ästen (tx) als zweite Anordnung (ii) verlegt und
unter Schwenkung der über die Position (P) des metallischen Störkörpers (S) hinweg verlaufenden Ästen (tx) um 90° in eine dritte Anordnung (iii) verlegt wird, wobei
nach Einrichtung einer jeder dieser Anordnung bzw. Konfigurationen (i, ii, iii) der Erregerschleife (Tx) Messungen mit vorgeschalteter Kompensation in allen Bohrlöchern (B) über alle Tiefenlage (T ± α ^{∗} Δ) mit ganzzahligen Werten für α von 0 bis 2 oder ca. 5 durchgeführt werden.

10. Verfahren nach einem der vorhergehenden Ansprüche, **dadurch gekennzeichnet, dass** die Messungen ohne Veränderungen an der Anordnung der Erregerschleife (Tx) auch für die beiden anderen Bohrlöcher (B) wiederholt wird, wobei besonders darauf geachtet wird, dass die Orientierung des Sensors (Rx) innerhalb der Anordnung über den Messvorgang der verschiedenen Bohrungen (B) und nach der Kalibrierung immer gleich bleibt, das Koordinatensystem des dreiachsigen Magnetometers (M) unverändert bleibt, ohne Rotation während aller Messungen des Störkörpers (S), indem eine entsprechende Markierung auf dem Sensor für eine visuelle Kontrolle der Position dieser Markierung während des Einsetzens des Sensors (Rx) in eine neue Bohrung (B) verwendet wird.

11. Verfahren nach einem der vorstehenden Ansprüche, **dadurch gekennzeichnet, dass** das Koordinatensystem des dreiachsigen Magnetometers (M) nach der Kalibrierung auch während des Einsetzens in eine andere der genannten Bohrungen (B) unverändert bleibt, indem eine mechanische Führung in Form einer Nut oder einer anderen Führung während des Einsetzens des Sensors (Rx) in eine neue Bohrung (B) verwendet wird.

## Revendications

1. Procédé de détection des munitions non explosées par la caractérisation d'une masse métallique d'interférence (S) qui se trouve cachée sous une surface du sol (BO),
où à la surface du sol (BO), un trou de forage (B) est creusé à proximité d'une position (P) de la masse métallique d'interférence (S) au moins jusqu'à une profondeur (T) qui correspond à la position de la masse métallique d'interférence (S) et
les impulsions électromagnétiques sont transmises par une boucle d'excitation (Tx) dans le sol autour du trou de forage (B) et
une réponse impulsionnelle (A) est mesurée dans une unité de réception (Rx), l'unité de réception (Rx) étant abaissée dans le trou de forage (B), dans laquelle
une réponse impulsionnelle (A) de la masse d'interférence (S) avec une progression chronologique est détectée et évaluée dans l'unité de réception (Rx) au moyen d'un capteur magnétique ou d'un magnétomètre (M), dans les trois axes spatiaux x, y, z dans le trou de forage (B), où à proximité de la position (P) de la masse d'interférence métallique (S), afin d'arriver à des conclusions plus claires concernant sa forme et son orientation dans le sol, au moins trois trous de forage (B) sont creusés, qui forment un triangle essentiellement équilatéral les uns avec les autres
et la position (P) de la masse d'interférence métallique (S) est située approximativement au centre de ce triangle,
où une évaluation chronologique des signaux de réaction magnétique est effectuée dans les trois axes spatiaux orthogonaux les uns par rapport aux autres afin d'arriver à des conclusions plus claires concernant la forme et l'orientation de la masse d'interférence métallique (S) dans le sol pour distinguer une pièce de munition non explosée d'une pièce métallique en grande partie non dangereuse.

2. Procédé selon la revendication précédente, **caractérisée en ce qu'**avant un cycle de mesure, une étape de compensation est réalisée, dans laquelle les résultats d'une mesure effectuée alors que la boucle d'excitation (Tx) est coupée sont déterminés et, à des fins de mise à zéro, sont stockés dans un élément de compensation (K) pendant au moins la durée de ce cycle de mesure, pour être pris en compte dans les résultats de mesure.

3. Procédé selon l'une des revendications précédentes, **caractérisée par le fait que** la procédure de mesure est répétée à différentes profondeurs du trou de forage (B) au-dessus et en dessous de la profondeur présumée (T) de la masse métallique d'interférence (S).

4. Procédé selon l'une des revendications précédentes, **caractérisée en ce qu'**une distance maximale (a) d'environ 200 cm entre le trou de forage (B) et la position (P) de la masse d'interférence métallique (S) est calibrée, mais de préférence, une distance (d) de la masse d'interférence métallique (S) d'environ 120 à environ 150 cm est calibrée.

5. Procédé selon l'une des revendications précédentes, **caractérisée en ce que** l'excitation par induction est effectuée dans différentes directions spatiales (x, y, z) orthogonales les unes aux autres par une orientation correspondante du champ primaire basée sur une disposition différente d'une boucle d'excitation (Tx) reposant sur la surface du sol (BO).

6. Procédé selon la revendication précédente, **caractérisée en ce que** différentes configurations de la boucle d'excitation (Tx) sont posées et mesurées, dans laquelle la boucle d'excitation (Tx) est posée sous la forme d'un carré ou sous la forme d'une boucle en forme de huit dans le carré est déplacée sur la position (P) de la masse d'interférence métallique (S).

7. Procédé selon l'une des revendications précédentes, **caractérisée en ce qu'**une distance (a) d'un bord extérieur de la boucle d'excitation (Tx) à la surface du sol (BO) est fixée à une longueur qui correspond au moins à la profondeur (T) correspondant à la position de la masse d'interférence métallique (S).

8. Procédé selon l'une des revendications précédentes, **caractérisée en ce que** les mesures sont répétées d'une fois à environ cinq fois à des distances (Δ) d'environ 20 cm à 100 cm, mais de préférence d'environ 50 cm, du changement de profondeur de l'unité de réception (Rx, M) dans le trou de forage (B), à la fois au-dessus et en dessous d'un niveau de profondeur estimé (T) de la masse d'interférence métallique (S), avec de préférence 2-3 mesures effectuées au-dessus et 2-3 mesures effectuées en dessous du niveau de profondeur estimé (T) de la masse d'interférence métallique (S).

9. Procédé selon l'une des revendications précédentes, **caractérisée en ce que** les mesures sont effectuées en conservant les trous de forage (B) dans trois configurations différentes (i, ii et iii) de la boucle d'excitation (Tx), dans laquelle en partant d'une boucle d'excitation (Tx) qui est disposée sous la forme d'un carré autour de la position (P) de la masse métallique en interférence (S) comme centre, puis deux mouvements de ce carré dans le plan x-y sont exécutés au moyen d'un pivot à 90
et/ou
la boucle d'excitation (Tx) est posée comme un second arrangement (ii) sous la forme d'une boucle en forme de huit à l'intérieur du même carré, avec deux branches (tx) s'étendant sur la position (P) de la masse métallique d'interférence (S) et
en faisant pivoter de 90° les branches (tx) s'étendant sur la position (P) de la masse métallique d'interférence (S), est posée dans une troisième disposition (iii), où
après un ajustement de chacune de ces dispositions ou configurations (i, ii, iii) de la boucle d'excitation (Tx), des mesures avec une compensation préalable sont effectuées dans tous les trous de forage (B) sur tous les niveaux de profondeur (T ± α ^{∗} Δ) avec des valeurs intégrales pour α de 0 à 2 ou environ 5.

10. Procédé selon l'une des revendications précédentes, **caractérisée en ce que** le processus de mesure dans un trou de forage (B) est répété sans aucun changement dans la disposition de la boucle d'excitation (Tx) pour les autres trous de forage (B) également, où un soin particulier est pris afin que l'orientation du capteur (Rx) dans la disposition reste toujours la même au cours du processus de mesure des différents trous de forage (B) et une fois calibré, le système de coordonnées du magnétomètre triaxial (M) reste inchangé, sans rotation dans toutes les mesures d'une masse d'interférence (S), en ce sens qu'un marquage correspondant sur le capteur est utilisé pour un contrôle visuel de la position de ce marquage lors de l'insertion du capteur (Rx) dans un nouveau trou de forage (B).

11. Procédé selon l'une des revendications précédentes, **caractérisée en ce qu'**une fois calibré, le système de coordonnées du magnétomètre triaxial (M) reste inchangé même pendant l'insertion dans un autre desdits trous de forage (B) **en ce qu'**un guidage mécanique sous la forme d'une rainure ou d'un autre guide est utilisé pendant l'insertion du capteur (Rx) dans un nouveau trou de forage (B).
